Europäisches Patentamt

European Patent Office

Office européen des brevets

(11) Publication number: **0 293 720**
**A2**

# EUROPEAN PATENT APPLICATION

(21) Application number: 88108253.1

(22) Date of filing: 24.05.88

(51) Int. Cl.⁴: **G06F 12/08**

(30) Priority: 03.06.87 IT 2076787

(43) Date of publication of application:
07.12.88 Bulletin 88/49

(84) Designated Contracting States:
DE FR GB

(71) Applicant: HONEYWELL BULL ITALIA S.p.A.
Via Martiri d'Italia 10
I-10014 Caluso (TO)(IT)

(72) Inventor: Ciacci, Franco
Via Goito 7
I-20013 Magenta (MI)(IT)

(54) **Transparent cache memory.**

(57) Transparent cache memory for data processing system in which a central processing unit requests the read out of an information contained in a working memory at a current address and immediately receives, whithout waiting, the requested information from the cache memory, if the requested information contained in the cache memory and meanwhile the cache memory performs the reading and the storing into the cache, of an information contained in the working memory at the address next following the current address, so as to advance a possible subsequent request of the central processing unit.

If the requested information is not contained in the cache memory, the cache memory performs a double memory read in page mode at the current memory address and at the next following address, thus minimizing the occupation times of the memory. The double reading is performed only for those addresses which allow for page mode operation.

FIG. 4

## TRASPARENT CACHE MEMORY

The present invention relates to a transparent high speed buffer memory or "cache" for data processing systems.

It is known that in data processing systems, in order to increase performances and to use resources at the best, it is required that the operative speed at which the memory is capable of providing information to the central processing unit or to the several processor, in case of multiprocessor systems, be greater than the operating speed of the central unit or the processors.

Usually the working memory is a "bottleneck" which slows down the working speed and decreases the system performances.

Several arrangement have been proposed to remove this drawback.

An arrangement consists in providing a working memory having a parallelism multiple of the central processing unit parallelism or the several processors and in dividing the memory in banks, in block or with an interleaved structure.

By dividing the memory in banks, several, independently addressable memories are obtained, which may service simultaneous read write operations, requested by different processors, provided these operations effectively require the use of different banks.

With an interleaved structure it is possible to simultaneously read or write in a plurality of memory locations having contiguous addresses (for instance even or odd) so that at each read/write request at a given address, the read/write operation of an information at a contiguous address is performed.

By providing suitable interface buffer registers among the central unit and the memory it is therefore possible, in case the plurality of information handled by the central unit has sequential addresses, to halve the number of memory accesses.

With the advent of data processing systems having high parallelism (32 bits) this approach results to be expensive, because it requires a memory parallelism of 64 bits.

A different arrangement, frequently used in computer of relatively high power, consists in providing associative memories or "caches" dedicated to the several processors which form the system.

Such memories store a copy of information blocks recorded in the working memory, as well as the corresponding address.

If a processor issues a memory read command for reading at a predetermined address, and this address is found to be present in the cache, the requested information is read out from cache and the working memory is not involved.

If the requested information is not in the cache, the requested information is read out from memory and further a cache loading process is started, owing to which the requested information is loaded in the cache, generally together with a block of information items having addresses contiguous to the address of the requested information.

The structure of such caches is complex and expensive, in that it requires logical control circuits which supervise the updating of the cache contents, when required, both for a better exploitation of the information stored therein both for congruence between the information stored in the working memory, which information may be modified both by the processor owing the cache, as well as by any other system processor.

These limitations are overcome by the cache memory of the present invention, which is simple, compact and suitable for embodiment in an integrated circuit.

Whilst in the prior art caches, the loading criterion is the loading of an information block when a requested information is not found as being already contained in the cache, the criterion used by the cache structure which is the object of the present invention is that for each information request to the memory, be it present in or missing from the cache, the cache is loaded with the information stored in main memory at the next following address.

In other words the criterion of prevailing sequentiality is exploited, with which instructions and program data are stored in working memory, to advance the reading of information in the reasonable prediction that, if an information is requested which is stored at a given address, also the information stored at the next following address is likely to be requested and is therefore made available without the delays intrinsic to a read memory operation.

Since the sequentiality criterion is generally followed separately by instructions and by data, the cache of the invention substantially comprises an incrementing unit for generating a next address based on a current address, a latching register for latching a next address of instruction, a latching register for latching a next address of data, two latching registers for storing the instruction and data respectively whose address is stored in the address registers, two comparators for comparing the current address of an information to be read out from memory with the information contained in the next address registers and logical circuits which, based on the result of such comparison provide:

- in case of successfull comparison: to transfer to the requesting processor the information already contained in the instruction or data latching register and to start a memory read at the incremented address (next address) generated by the incrementing unit.

- in case of unsuccessful comparison: to start a first memory read at the current address, to transfer the read out information to the requesting processor and to start a second memory read at the incremented address generated by the incrementing unit.

A cache memory so implemented is "transparent", that is it does not need the complex managing systems required by conventional caches: as to its interaction with the central unit, it receives signals normally provided to the working memory and limits its response to the generation of signals which would be generated by a working memory. In other words it does not need management mechanisms, for operation presetting, nor loading from the central unit, which cause in general time waste and central unit occupation.

A further aspect of the invention is that being foreseen, in particular circumstances, the subsequent execution of two memory read operations, these operations are performed in the so called "page mode", with a substantive saving in time and constructive components.

Two advantages are therefore achieved:

- At the level of central unit using the cache, every time the requested information is already contained in the cache, it can be rendered available to the central unit without delays, and during the processing of such information it is possible to read out from memory a new information which is likely to be requested thereafter.

By means of this overlap mechanism, the central unit may operate at a higher speed.

- At system level, each time the central unit requests an information which is not available in the cache, such information is read out from working memory and, if and only if a double read operation is possible in "page mode", the information stored at the next following address is read out too, the information being predicted as subsequently required.

In this way the global occupation time of the working memory by the cache is reduced to a minimum and the burden of performing a full memory cycle for reading a hazard information whose future need is not certain, even if probable, is avoided.

A further aspect of the cache of the invention is that being it provided with latching registers for data read-out from memory and being it dedicated to a specific central unit of the data processing system, the memory may be accessed by a plurality of processors, other than the central unit to which the cache is dedicated, without having such processors modifying the status of the cache registers, thus rendering uneffective the read pre-execution mechanism, owing to interleaved memory read operations performed by different processors.

In particular it is also possible to assure the congruence between the contents of the cache and the contents of the working memory, which may be modified by write operations, performed by any processor, both by means of well known software mechanism, both by means of hardware circuits which will be described.

These and other features of the invention and the advantages thereof will appear more clearly from the following description of a preferred form of embodiment and from the enclosed drawings where:

- Figure 1 is a block diagram of a data processing system embodying the cache memory of the invention.

- Figure 2 is a timing diagram showing the operation of the central processing unit of Fig. 1.

- Figure 3 is a timing diagram showing the operation of the working memory and related control unit of Fig. 1.

- Figure 4 is a circuit diagram of the cache memory of the invention.

- Figure 5 is a detailed circuit diagram of the control logic for the cache memory of Fig. 4.

-Figure 6 is a detailed circuit diagram of a status logic for the cache memory of Fig. 4.

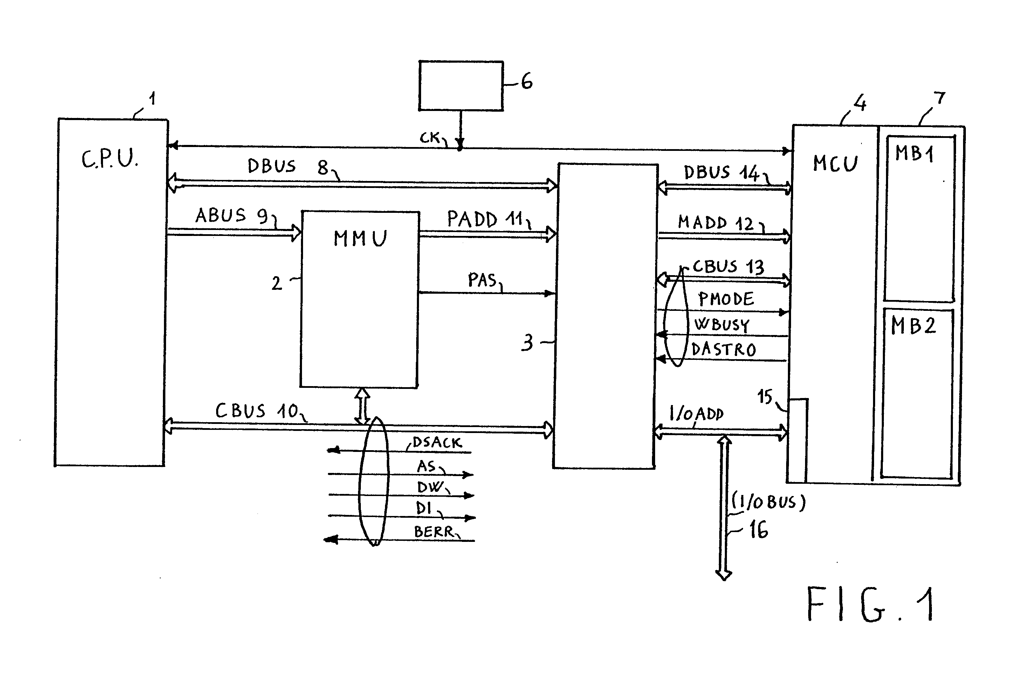

Figure 1 is a block diagram of a data processing system incorporating the cache memory of the invention.

The system comprises a central processing unit or CPU 1, a memory address management unit or MMU3, the cache memory 3, a memory control unit MCU4, an oscillator 6 for generating a periodic timing signal and a working memory 7 comprises of a plurality of modules, arranged, by way of example in two blocks MB1, MB2.

Even if CPU1, MM2 and working memory may be implemented in several ways, it is advisable, for sake of clearness, to refer to a CPU 1 consisting in microprocessor MC 68020 manufactured by firm Motorola, and to the related MMU consisting in the integrated circuit MC68851.

At block diagram level of Fig. 1 the system architecture is conventional: CPU 1 is connected to the working memory 7 for information transfer (read/write) through a data bus DBUS 8, the cache memory 3, a data bus DBUS 14 and the memory control unit 4.

The memory address where to perform the transfer is provided by CPU 1 through address channel ABUS 9, via memory management unit 2, which converts a virtual address in a physical address and inputs it, through output channel PADD 11, cache memory 3, channel MADD 12 to the memory control unit 4.

Transfer control signals are exchanged among CPU1, MMU2, cache memory 3, through control channel CBUS 10, and between cache memory 3 and memory control unit 4 through control channel CBUS 13. DBUS 14, MADD 12, CBUS 13 constitute, in the whole, a communication port for memory control unit 4, which is of the two ports type, that is provided with a second port 15 connected to a communication bus 16 for connection to I/O processors and peripheral control units, not shown.

Memory control unit 4 resolves, in known manner, conflicts among memory access requests coming from the two ports, on the basis of suitable priority criteria.

For a better understanding of some implementation aspects of the cache memory of the invention, it is advisable to advance some considerations on the information or operands transferred between CPU1 and memory 1 as well as on memory 7 organization.

CPU1, channels DBUS 8, DBUS 14 and memory 7 have a 32 bits parallelism and at each memory cycle 4 bytes can be transferred.

The addressing structure of CPU 1 is at byte level with an address code A0-31 present on ABUS 9, and minimum operand length is generally 16 bits (a word).

Memory 7 is organized in 4 byte blocks, each addressed by the most significant address bits, and with exclusion of the less significant bits A0,A1.

Each memory access operation may therefore refer to a word operand, identified by an address A2-31 and located in memory block MB1 or MB2 depending on bit A1 being at level 0 or 1, or to a double word operand, which must be aligned with the memory structure and therefore must be identified by an address where bit A1 is equal to 0.

CPU internally provides to divide non aligned double word operands in two distinct operands which are transferred with two separate memory access operations.

When starting a memory access operation, CPU 1 generates on some control leads (channel CBUS) signals which indicate if the operand to be transferred is one word long or double word long.

On other control leads it is further signaled if the operand to be transferred is a data or an instruction.

For sake of simplicity it is assumed that the operand length is defined by a single signal DW, which at level 0 indicates a one word length and at level 1 indicates a double word length. Such signal may be obtained with a very simple deconding of the signals generated by CPU 1.

Likewise it is assumed that CPU 1 identifies the operand as a data or instruction by means of a single signal D/I which is 0 for indicating a data and a 1 for indicating an instruction.

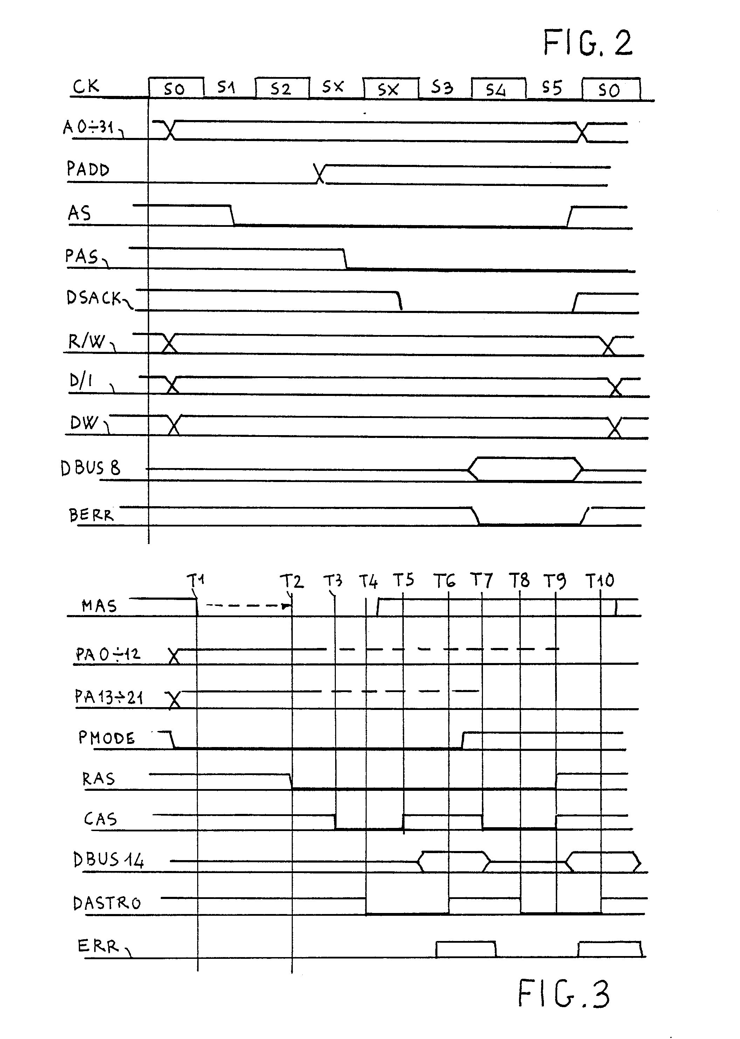

Always for a better understanding of the invention, the operation of CPU 1 and MMU 2 for memory transfer is described with reference to the timing diagram of figure 2.

The operation of CPU1 develops in the course of timing cycles defined by a periodic signal CK generated by oscillator 6.

Signal CK has, for instance, a period of 60 nsec and comprises two square wave half periods each of 30 nsec duration.

Each half period defines a CPU working state.

A memory read operation requires six working states and a variable number of waiting states, depending on the speed at which memory is capable of satisfying the CPU1 request.

During a first state S0, CPU1 puts a logical address A0-31 on address bus and a set of control signals on control bus. Among such signals are signal R/W at level 1 to indicate a read operation, signal D/I (D/I = 0 for a data, D/I = 1 for an instruction) and signal DW (single or double word).

During state S1, CPU1 drops a signal AS to 0 to validate the signals present on address and control bus.

MMU2 receives control signal D/I, logical address A0-31, address strobe signal AS and with a maximum delay of 45 nsec from the receipt of AS, puts on channel PADD the physical address corresponding to the logical address and lowers a strobe and validation signal PAS on an omonimous lead. This event occurs in state SX next following state S2.

If, within state S2 CPU 1 does not receive a signal DSACK at logical level 0, it puts itself in a wait state SX comprised of one or more clock periods.

Signal DSACK received by CPU 1 must guarantee to CPU 1 that with a delay of a clock period at the latest, the requested information will be available on data bus.

When signal DSACK is received, CPU 1 moves to states S3 and S4 and, at the end of state S4 it loads the information present on data bus DBUS 8 on an internal register.

The loading occurs only if CPU 1 receives a signal BERR at logic level 1 on a lead of the control bus, BERR being indicative at level 1 that the read operation has been performed correctly and no error is present in the read out operand. In case of error BERR must be lowered at least 20 nsec in advance of the transistion from state S4 to state S5.

At read operation concluded, during state S5, CPU 1 rises again to 1 signal AS.

When MMU2 and the unit which has generated DSACK signal receives signal AS = 1, they must respectively raise again to 1 signal PAS and signal DSACK.

From the preceding description it is clear that memory control unit MCU 4, in order to operate with CPU needs to have a data input/output channel, an address input channel, a signal input for starting the memory operation (signal PAS may perform this function), an input for receiving R/W and must be capable of generating a signal DASTRO to perform the function requested to signal DSACK.

Therefore MCU4, as well as memory 7, may be of conventional type.

Preferably memory 7 has a size of 2 exp 22 double words and is page organized.

Each memory entry is referenced by a physical address PA0-21 (bit PA22 references only the word within the entry) in which PA0-12 bits define a row address and bits PA 13-21 a column address.

The page organization enables, in well known way, to perform read/write operations in "page mode". In other words, the memory may be controlled to perform two or more subsequent read/write operations, maintaining unchanged the row address and changing at each memory (shortened) cycle the column address.

This working mode is controlled by a signal PMODE received as input by MUC4.

Figure 3 shown in timing diagram the oepration of MCU 4 and of related working memory 7.

At generic time T1 MUC 4 receives an address (PA0-12) and PA13-21) on address bus and an address strobe and memory request MAS = 0.

In case it also receives a signal PMODE = 0 for controlling operation in "page mode".

If the memory is busy, for instance because a memory access through the second I/O port is already in course of execution, a generic time elapses before the request is taken in consideration.

At time T2 the memory request is taken in consideration, the address transferred to memory and the row address strobed by a signal RAS.

At time T3 a signal CAS = 0 validates the column address and at a time T4 MCU4 outputs a signal DASTRO = 0.

At time T5 signal CAS rises to 1 and immediately thereafter the read out data is available from memory and is put on data channel DBUS 14.

At time T6 DASTRO signal is raised to 1, to indicate that the data is available.

If PMODE signal is 0 a new read cycle is started and a new column address must be present on the address bus at least within time T7, at which CAS signal drops to 0.

At time T8 signal DASTRO drops to 0 to signal that within a predetermined time interval a new data will be available on data bus DBUS 14.

At time T9 CAS signal raises to 1 as well as RAS (if PMODE is meanwhile raised to 1) and a new data is made available on data channel and can be strobed with the raising to 1 of signal DASTRO at time T10, which ends the memory operation.

The data present on data bus are accompanied, in case of error, by a signal ERR = 1 on an error output.

Other signals, among which R/W, are present at the communication interface between MCU 4 and CPU 1 but are not essential for the understanding of the invention.

The several times T1.....T10 are defined by a memory timing unit, as a function of the memory speed.

The only timing requirement imposed from the outside of memory is that signal DASTRO = 0 must not have a duration greater than 60 nsec to meet the requirement imposed by CPU 1.

It may now be considered how the cache memory of the invention is located and operates between the interface defined by CPU 1 and MM2 on one side and the interface defined by MCU 4 on the other side.

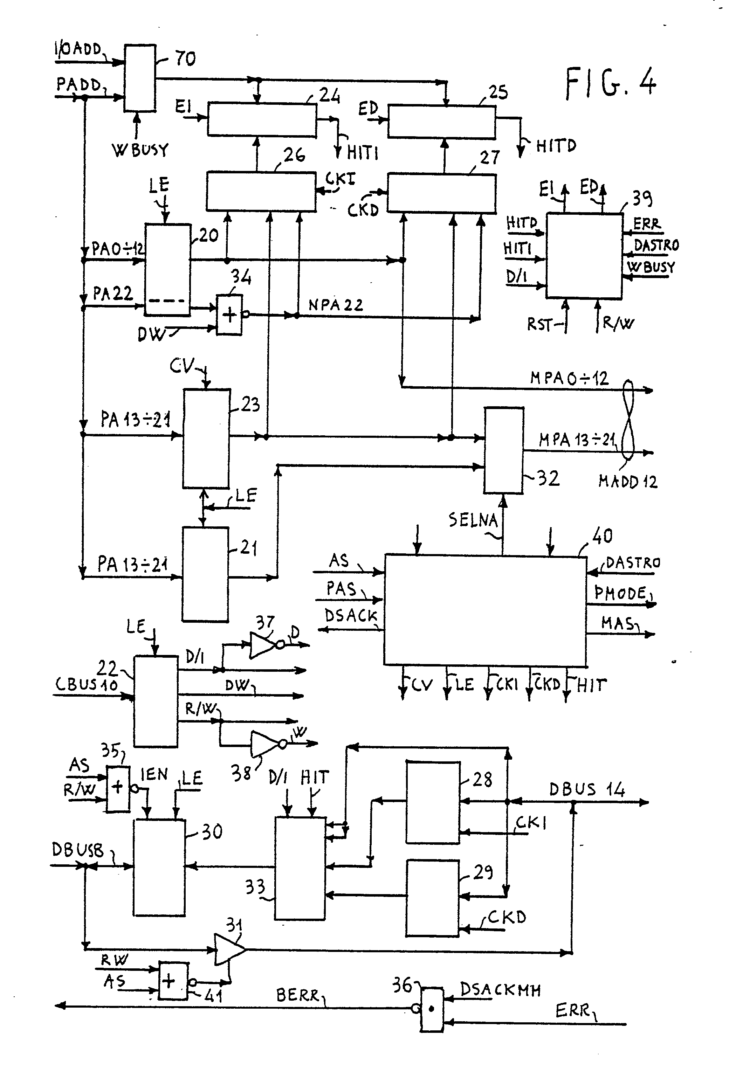

The cache memory 3 block diagram is shown in fig. 4.

The cache memory 3 comprises a plurality of transparent latch registers 20,21,22,30 an adder with transparent latch output register 23, two comparators 24,25, four register 26,27,28,29, a set of tristate gates 31, two multiplexers 32,33, three NOR gates 34,35,41, one NAND gate 36, two NOT gates 37,38 and two functional blocks 39,40 respectively for controlling the status of the cache memory (block 39) and for controlling the read operations performed by the cache memory (block 40).

The two comparators 24,25 have a first input set connected to channel PADD to receive from MMU 2 the physical addresses PA0-22 present on the channel, through a multiplexer 70, which may be omitted because it performs an auxiliary function considered later on.

A second input set of comparators 24,25 is respectively connected to the outputs of registers 26, 27.

The two comparators receive at a control input a signal, EI,ED respectively, generated by status logic block 39.

When EI,ED are at logic level 0, the two comparators are disabled and output a signal HITI, HITD at logic level 0.

When EI,ED = 1 the comparators are enabled and, if the code received at the first input set coincides with the code received at the second input set, comparator 24 or 25 for which such coincidence is verified raises to 1 output signal HIT, HITD, which otherways remains to 0.

Latch registers 20,21 and adder 23 have their inputs connected to channel PADD to respectively receive address bits PA 0-12 and PA22 (register 20) and PA13-21 (register 21 and adder 23).

A control signal LE generated by logic block 40, when at level 1 enables the register to follow the level changes of the signals in input. When signal LE is at level 0 the status of the registers is "frozen".

Adder registrer 23 receives a signal CV at a second control input.

CV is generated by logic block 40. When CV = 0 the adder increments by 1 the code received as input and transfers it to the output. When CV = 1 the adder transfers at the output the code received as input.

The outputs of register 20, by the exception of the one corresponding to address bit PA22, are connected to inputs of registers 26 and 27. The same is for the outputs of adder 23.

The output of register 20 corresponding to address bit PA22, is connected to an input of NOR gate 34, which receives signal DW coming from register 22, at a second input.

The output of NOR gate 34 is connected to an input of registers 26,27.

The Registers 26,27 are loaded with the input information by the falling edge of a control pulse CKI, CKD respectively, which is generated by logic block 40.

Register 22 has its inputs connected to control bus CBUS and latches the several commands D/I,DW,R/W present on such bus. From commands D/I and R/W signals D and W are respectively obtained through inverters 37 and 38.

The outputs of adder/register 23 and register 21 are connected to two input sets of multiplexer 32 whose outputs MPA 13-12, along with outputs MPA 0-12 of register 20, constitute the address channel MADD12 for MCU4.

Multiplexer 32 is controlled by a signal SELNA provided by logic block 40.

If SELNA = 0 the information in output from adder/register 23 is transferred to the output of multiplexer 32.

If SELNA = 1 the information in output from register 21 is transferred to the multiplexer output.

The inputs of registers 28,29 and a pair of input sets of multiplexer 33 (having four input sets) are connected to channel DBUS14, input/output data bus for MMU4.

The outputs of registers 28,29 are respectively connected to the other two input sets of multiplexer 33, whose outputs are connected to the inputs of latch register 30, having tristate outputs connected to data bus DBUS 8 of CPU1.

Register 28,29 are controlled, similarly to registers 26,27, by loading pulses CKI, CKD, respectively.

Multiplexer 33 is controlled by two signals D/I and HIT, the first being output from register 22, the second being generated by logic block 40,22.

When HIT = 0, multiplexer 33 outputs the information present at the register 28 output or at the register 29 output depending on D/I being 1 or 0 respectively. When HIT = 1, multiplexer 33 outputs the contents of channel DBUS 14, independently of the level of signal D/I.

Register 30 has inputs enabled by signal LE. Its outputs, of tristate type, are enabled by a signal IEN = 1. If IEN = 0 the outputs are held in high inpedance state.

IEN signal is produced by NOR gate 35, which receives as input signal AS, CPU1 generated, and signal W from the output of inverter 38.

The tristate gate set 31 ha inputs connected to the bus DBUS 8 and outputs connected to bus DBUS 14 and, when enabled by a signal OEN = 1, outputs the information input. When OEN = 0 the outputs are held in high inpedance state. OEN signal is output from NOR gate 41, which receives as input signal AS (from CPU1) and signal R/W from register 30. _

The error signal ERR in output from MCU4 is input to NAND gate 36, which receives at a second input a DSACKMM control signal, generated by logic block 40. When DSACKMM = 1 the logic level of signal ERR is output and constitutes signal BERR, forwarded to CPU 1.

Before describing in detail the status logic 39 and the control logic block 40 it is advisable to briefly describe the function performed by the cache memory.

Basically the cache memory has to anticipate the working memory reading on prediction of a data or instruction request, making available the already read out information as soon as it is requested.

To this purpose registers 28 and 29 are devoted to contain a NEXTI (next instruction) and a NEXTD (next data) respectively, whose memory addresses are respectively loaded in registers 26 (NEXTI ADD) and 27 (NEXTD ADD).

In general, when CPU1 requests a memory read operation for obtaining a data or instruction, the address of the requested operand is input to comparators 24,25.

If neither one of comparators provides a hit signal, this means that the requested operand is not present in either register 28 or 29.

Therefore the control logic generates a memory read command MAS, which is forwarded to MCU4 along with the address of the requested operand, the address being transferred on channel MADD12 through registers 20,21 and multiplexer 32.

On receipt of the double word containing the requested operand (working memory 7 ignores bit PA22), this double word is transferred through DBUS 14, multiplexer 33 and register 30 on bus DBUS 8 of CPU 1.

It is further loaded in register 28 or 29 depending on it being an instruction or a data.

At the same time a new address is loaded in register 26 or 27, depending on the information being an instruction or a data.

The new address is obtained from the current address in accordance to the following rule.

If bit PA22 of the current address is 0 and the length of the requested operand is a single word (DW = 0), the NPA22 bit loaded in register 26 or 27 is put equal to 1 and bit PA 13-21 are not modified (the adder incrementation is inhibited by signal CV = 1).

In the other possible alternatives (PA22 = 1 or DW = 1) bit NPA22 loaded in register 26 or 27 is set to 0.

Moreover, if the condition PA13-21 not all ones is verified, the bits PA13-21 loaded in register 26 or 27 are incremented by one (the adder 23 is enabled by signal CV = 0).

It is clear that in case of current address having PA22 = 0 and DW = 0, the new operand defined by the nex subsequent address has been made available by the read operation and latched in register 28 or 29, on prediction of its future need by CPU1.

On the contrary, if bits PA13-21 of the current address, which correspond to a column address are not all ones and do not define the end of a memory page, which would preclude the feasibility of a second read operation "in page mode", the control logic block 40, tested the occurrence of these conditions, controls a second memory read, in page mode, at a new address corresponding to the one present in register 26 or 27 and loads the read out information in register 28 or 29 it is available on prediction o a next request from CPU1.

Therefore the same relation existing between memories locations and related contents generally exist between addresses contained in register 26,27 and operands contained in registers 28,29.

Later on possible exceptions will be considered.

Now, if CPU 1 controls a read memory operation and one of the comparators provides a hit (positive comparaison result), this means the requested information is already available in requester 28 or 29.

Therefore control logic 40 provides to immediately generate signal DSACK for the CPU 1 and to transfer the requested information, through multiplexor 33 and register 30 to data bus DBUS 8.

In addition, if this is justified and permitted by the received conditions, that is if PA22 = 1 or DW = 1 and at the same time PA13-21 are not all ones, logic block 40 controls a memory read operation at the next following memory address and provides to load the read out information in the proper register 28 or 29 and the related address in the proper register 26 or 27.

It is therefore clear that in the course of sequential memory addressing by CPU 1, once the cache memory has been loaded, the requested information items are already available in the cache and no waiting time is spent by CPU 1, the request of information which will become needed in the following being anticipated by the cache memory.

It has been mentioned that possible exception may occur to the associativity between memory addresses contained in register 26,27 and registers 28,29 contents.

These exceptions are due to several causes:

First, when the system is initialized, registers 28,29 are empty or have random contents. Therefore comparators 24, 25 have to be disabled, so as to avoid they providing a wrong positive comparison result.

It may further happen that in the course of a process performed by CPU 1, a write operation at an address N + 1 follows a read operation at an address N (by which the cache memory is in fact loaded with an information at address N + 1).

In this case the information contained in the cache , is no more the information contained in the working memory at the same related address.

Further it may happen that in the course of a read operation, performed in autonomous way by the cache memory 3, an error is detected.

Even in this case it is advantageous, rather than latching the error indication for next consideration by CPU 1, to disable the related comparator 28 or 29.

In this way, if CPU 1 requests the information at address N + 1, a memory read operation is started with some chance, if error was of transient nature, to receive a correct information and to avoid the start of error recovery procedures.

Consistent with these exceptions, status logic block 39 provides to:
- disable both comparators at initialization reset.
- disable comparator 24 in case of hit occurring during an instruction write operation on in case of uncorrectable error detected when reading an instruction, in both cases at the address next following the current one.
- disable comparator 25 in case of hit occurring during a data write operation or in case of uncorrectable error detected when reading a data, in both cases at the address next following the current one.

Status logic block 39 provides further to enable comparators 24,25 one at a time, once a memory read operation with no error has been performed, of an instruction or a data respectively, because this operation systematically reestabilishes the identify between register 28 or 29 contents and the contents of the addressed memory location, as well as the identify of the address loaded in register 26,27 (less bit PA22) and the address of the read out memory location.

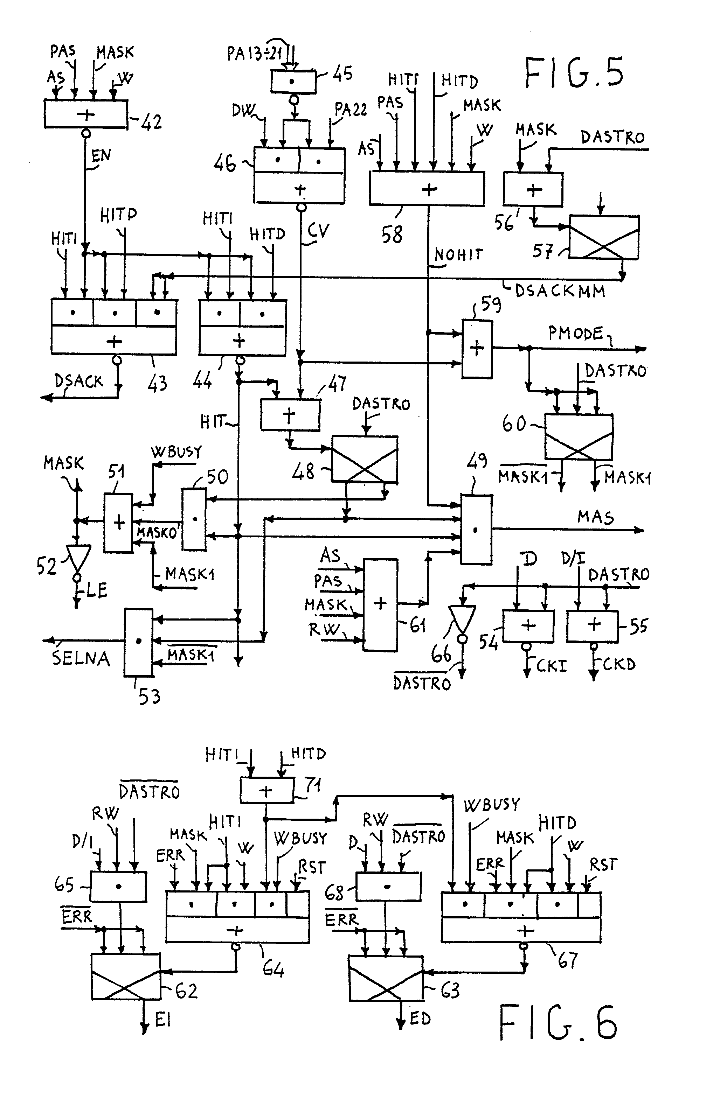

Figure 5 shows the logic diagram of a preferred form of embodiment for control logic 40.

A NOR gate 42 receives signals AS,PAS,MASK,W as input and outputs a signal EN at a logic level 1, only when all input signals are at logic level 0, that is only if CPU 1 controls a read operation (AS = 0, W = 0), the physical address is present (PAS = 0) and MASK = 0.

It will be seen later that MASK is a signal generated by logic block 40, when it requests in autonomous way the start of a memory cycle, MASK dropping at 0 once the memory cycle has been completed. MASK signal prevents cache memory 3 from taking into consideration a memory read operation, before a previously started read operation is completed.

Basically, a delay in the completion of a memory read operation requested by cache memory may be due to the circumstance that the working memory is already busy, for operations requested by I/O units through the second port.

In fact, assumption has been made that MCU4 is of the two ports kind.

Signal EN defines a time interval or time window, during which signals HITI, HITD in output from comparators are valid and stable.

Signal EN is input to a pair of AND sections of AND/OR/INVERTER 44.

Each of these two AND sections of gates 43 receives further signals HITI,HITD from comparators 24,25, respectively. Gate 43 outputs signal DSACK, forwarded to CPU1 and gate 44 outputs a HIT = 0 signal which perform several functions including the control of multiplexer 33.

It is clear that if MASK = 0, hence the cache memory is not already running a memory request, as soon as a memory request is raised (AS = 0, W = 0) and the physical address is available (PAS = 0), if there is a hit between physical address and one of the addresses contained in register 26,27 (HITI = 1 or HITD = 1), signal DSACK is dropped to 0 (together with signal HIT), with a delay limited to the propagation delay of gates 42,43 which may be contained within the limit of 20-30 nsec.

At the same time multiplexer 33 outputs the requested information on register 30, which in turn transfers it to DBUS 8.

Signals DSACK and HIT remain at level 0 until the rising to 1 of signal AS by CPU 1, the CPU concluding its read cycle which, it is to be noted, does not affect the working memory.

A NAND gate 45 receives bit PA13-21 as inputs; if they are not all ones, gate 45 outputs a level 1 signal which enables the two AND section of AND/OR/INVERTER 46.

Gate 46 receives at the input AND sections signal DW and PA22 respectively.

Therefore if the conditions which justify and permit a memory write operation to the next following address are met, signal CV at the output of gate 46 drops to 0.

Signals HIT and CV are input to an OR gate 47, whose output is connected to the set input of a JK flip flop 48.

As soon as HIT drops to 0, if CV too is at 0 level, flip flop 48 is set. The inverted output of flip flop 48 is connected to a input of an AND gate 49, which receives signal HIT at a second input and outputs signal MAS. Thus, as soon as HIT drops to 0, signal MAS drops to 0 and remains to 0 until the reset of flip flop 48.

A memory read request is therefore generated.

Flip flop 48 is reset by the raising edge of signal DASTRO received from MCU4. Therefore the memory request is maintained until honoured by the working memory.

The non inverting output of flip flop 48 is connected to an input of NAD gate 50 which receives signal HIT at a second input.

Gate 50 outputs a signal MASKO which raises to 1 together with HIT and remains to 1 for the time flip flop 48 is set.

Signal MASKO, through OK gate 51 generates signal MASK, from which signal LE is obtained through an inverter 52.

Signal HIT is further input to AND gate 53 whose second input is connected to the inverting output of flip flop 48.

AND gate 53 outputs a signal SELNA which controls multiplexer 32.

Thus, as soon as HIT = 0, SELNA drops to 0 too and selects as address for the working memory and related MCU4 the address in output from register 23, which meanwhile has incremented its contents by 1, because CV = 0.

When HIT rises to 1 signal MASK rises to 1, signal SELNA remains to 0 and signal EN drops to 0, blocking the status of the several registers 20,23,21,22,30, until the reset of flip flop 48, that is until the execution of the memory read operation.

Once the memory read operation has been performed, signal DASTRO, in input to NOR gates 54,55 receiving at a second input signal D and D/I respectively, causes the generation of a positive control pulse CKI or CKD, whose falling edge controls the loading of registers 26,28 or 27,29 the first (26,27) with the address of data or instruction which has been read out, the second (28,29) with the read out operand itself.

It will be noted from the diagram of fig. 5, that DASTRO signal, is also input, through OR gate 56, to the set input of flip flop 57, whose direct output is connected to an AND section of AND/OR/INVERTER 43.

However, if MASK = 1, DASTRO does not have effect on flip flop 57, and therefore the generation of a new DSACK signal towards CPU 1 does not occur.

In conclusion, when HIT = 0 and CV = 0 the operand request generated by VPU 1 is immediately honoured by the cache memory 3, which immediately thereafter starts a memory read operation which is performed without involving CPU 1.

The case has now to be consider, in which comparators 24 and 25 do not provide a hit signal.

An OR gate 58 receives as inputs, signals AS, PAS, MASK,W,HITI,HITD.

Signals AS,PAS,MASK define the time window in which signals HITI, HITD are valid.

Therefore, if within such window signals HITI, HITD are at level 0 and a read operation is controlled (W = 0), the output of OR gate 58 drops to 0 (signal NOHIT).

The output of gate 58 is connected to input of AND gate 49.

Therefore signal NOHIT = 0 causes the generation of the memory access request signal MAS = 0.

During the memory operation, the falling of DASTRO signal to 0 causes, via OR 56, Flip Flop 57, AND/OR/INVERTER 43, the generation of signal DSACK = 0 towards CPU1 and, at memory cycle completed, the transfer of the requested information to CPU 1, via DBUS 14, Multiplexer 33, register 30, DBUS 8.

The read out operand and the related address, which is the current address, are further loaded in register 28 or 29 and 26 or 27 respectively.

Further, if the conditions which justify and make possible a second memory read occur (CV = 0), the joint presence of signals NOHIT = 0 and CV = 0 at the input of OR gate 59 causes, at the output of gate 59, the generation of signal PMODE = 0.

This signal informs MCU 4 that the requested read operation is multiple, in "page mode".

Signal PMODE is input to the J,K inputs of flip flop 60, which receives signal DASTRO at the clock input.

If PMODE = 1 the raising edge of signal DASTRO resets or holds in reset flip flop 60, which otherwise, if PMODE = 0, is set.

Therefore at first memory read cycle concluded, with the first raising again of DASTRO to 1, flip flop 60 is set and at its outputs signals MASK1 rises to 1 and MASK1 INVERTED drops to 0. MASK1 is input to OR gate 51 which raises MASK to 1 and lowers LE to 0.

MASK1 INVERTED is input to AND gate 53, which generates signal SELNA = 0.

Multiplexer 32, which up to that time was transferring, towards MCU4, the current address contained in register 21, is therefore switched to transfer the next following column address contained in register 23.

Therefore a second memory read operation is performed, at the conclusion of which, with the raising of DASTRO, flip flop 60 is reset (PMODE is brought to 1 by signal MASK, via or 58) and the new read out operand and related address are loaded in register 28 or 29 and 26 or 27 respectively.

In case of write operation, the control logic block 4 is involved only in marginal way: an OR gate 61 receives signals AS, PAS, MASK and RW as inputs and has the output connected to an input of AND gate 49.

Therefore it limits its operation to the generation of signal MAS towards MCU4, compatible with memory operation already in course, and to the transfer, via OR56, flip flop 57, gate 43, of signal DASTRO, DSACKMM, DSACK to CPU 1, to indicate that the memory write operation has been completed.

Figure 6 is a diagram of status logic block 39, which essentially comprises two flip flops 62,63.

Flip flop 62 has the reset input connected to the output of an AND/OR/INVERTER gate 64.

A first AND section receives an initialization reset signal RST.

A second AND section receives signals HITI and W.

A third AND section receives signals ERR, MASK, HITI.

Therefore flip flop 62, providing signal EI as direct output, is reset on the occurrence of each of several indicated condition sets.

The J,K inputs of flip flop 62 receive signal ERR INVERTED and flip flop 62 is set by a negative transition received at the clock input, if ERR = 0, otherwise it is held in reset.

The clock input is connected to the output of AND gate 65, which receives as input signals D/I, RW and DASTRO INVERTED (obtained from DASTRO through inverter 66 of fig. 5).

Thus flip flop 62 is set, and signal EI raises to 1 on the occurrence of the mentioned enabling conditions.

Flip flop 63 which generate signal ED is controlled substantially in the same way through a reset AND/OR/INVERTER gate 67 and a clock AND gate 68.

The only difference between gates 64 and 67 is that tha AND sections of gate 67 receive signal HITD instead of HITI, and the difference between gate 65 and 68 is that gate 68 receives signal D instead of D/I.

It is clear that the preceding description refers to a preferred embodiment of the invention which, at broad extent, depends on the requirements of the neighbouring CPU 1 and MCU 4, and that memory organizations other than the described one may render simpler or more complicated the control logic.

For instance if data and instructions are always arranged in double words, or more generally with the same memory parallelism, the expedients related to the handling of bit PA22 and to the control of adder 23 become superfluous.

A further aspect relates to the synchronous, asynchronous operation of the cache memory.

In the described embodiment a control logic has been used which is timed by control signals received from CPU 1 and MCU 4.

It is however possible to use control logics timed by an external timing signal and provided, in case, with timing units, triggered by an external clock signal to generate suitable control signal sequences.

This approach may be valid in case the system uses CPU's other than those implemented with microprocessor 68020.

Such CPUs may need the masking of received clock signals, until the occurrence of predetermined events, in particular the availability of requested operands, to resume oepration in synchronism with a system clock signal.

The problem of congruence between the contents of registers 28,29 the cache memory and the contents of the working memory deserves particular consideration.

It has been already seen that in case of write operation by CPU on working memory, the cache memory 3 controls that the memory addresses do not coincide with addresses contained in registers 26,27.

If this occurs the status logic provides to disable comparators 24, 25.

However it must be reminded that the working memory can be addressed for write operations, by I/O processors, through port 15 (Fig. 1).

Therefore it must be avoided that a write operation, performed by an I/O processor, changes the contents of memory locations, if such contents are also stored in one of the two registers 28,29.

If this happens, it is mandatory to invalidate the contents of registers 28,29 by disabling comparators 24,25.

At SW level the problem is solved with suitable mechanism called "resource locking" by which one processor is exclusively enabled to obtain access for writing, to predetermined memory areas, whilst such access is at the same time inhibited to an other processor.

At hardware level, the problem is solved, in case of the cache memory of the invention, by the following arrangements.

It is assumed (fig. 1) that MCU 4, controlling access to the working memory by several processors, generates a signal WBUSY = 1 every time it grants memory access, for a write operations, to an I/O processor, through gate 15.

In particular it is assumed that this signal is synchronized with the system clock CK, and raises with the raising edge of CK.

In its turn the cache memory 3 is provided (Fig. 4) with multiplexer 70 having a first input set connected to bus PADD to receive the physical address generated by MMU2 and having a second input set connected to channel I/O ADD where memory addresses, generated by I/O processor are present.

This channel is part of bus 16 (I/O BUS).

Multiplexer 70 has the outputs connected to a first input set of comparators 24,25 (fig. 4) and is controlled by signal WBUSY to transfer in output the information present on channel PADD if WBUSY = 0 or the information present on channel I/O ADD if WBUSY = 1.

WBUSY signal is further input to OR gate 51 to generate signal MASK = 1 every time MCU4 assigns memory 7 to an I/O processor for a write operation.

It is therefore clear that in case of memory write operation by any of the I/O processors, access to the cache memory 3 by the CPU 1 is temporarily inhibited (MASK = 1) whilst the cache memory compares the memory address present on channel I/O ADD with the addresses contained in registers 26,27.

If the comparison is positive signal HITI or HITD is generated.

The status logic block (Fig. 6) comprises an OR gate 71 which receives signals HITI,HITD as inputs.

The output of OR gate 71 is connected to an input of a forth AND section of gates 64,67.

Signal WBUSY too is input to this fourth AND section.

Therefore in case of hit on a I/O write, the status logic is set in a condition by which comparators are disabled, until through read operations controlled by CPU1, in the already described way, the cache memory operativeness is reestablished.

## Claims

1) Transparent cache memory for data processing system in which a central processing unit (CPU) requests the information reading from a working memory, accessible by other system units, comprising.
- an input address bus (PADD) for receiving from said CPU and a current memory address,
- an input control bus for receiving a read/write control signal and a signal identifying the information to be written or read out as an instruction or a data,
characterized by that said cache memory comprises:
- a current memory address latching register (20,21) for latching the address received from said input address bus,
- an incrementing register (23) for latching a next subsequent memory address, equal to the address received from said input address bus, incremented by one,
- a first (26) and a second (27) latching register having inputs connected to the outputs of said incrementing register (23) for latching said next memory address, respectively when said next memory address is an instruction address or a data address,
- a first multiplexer (32) having inputs connected to the outputs of said incrementing register (32) and to the outputs of said current memory address latching register (21) for selectively transferring on an address output channel (MADD) said current memory address or said next memory address.
- an input bus (DBUS 14) for receiving information read out from said working memory,
- a third (28) and a fourth (29) latching register, having inputs connected to said input bus for storing the information read out from said working memory, respectively when said information is an instruction or a data,
- a second multiplexer (33) having inputs connected to said input bus (DBUS 14) and to the outputs of said third (28) and fourth (29) register for selectively transferring in output the information present on said input bus, or in output from said third or fourth register,
- an output register (30) having outputs connected to the output of said second multiplexer and outputs connected to an output bus (DBUS 8) for storing the information present at the output of said second mutliplexer,
- a first (24) and a second (25) comparator for comparing the current address present on said input address bus and the address latched in said first (26) and second (27) latching registers, and for a respectively providing an instruction HIT or a data HIT signal, in case of address coincidence, and
- logical control means (40) operative in response to said HIT signals and to the signals present on said input control bus: in case of instruction or data HIT to transfer through said second multiplexer and to load in said output register, the information presente in said third or fourth register respectively, to transfer through said first multiplexer, to said working memory, the address stored in said incrementing register, to start a memory read operation at said next address and to load said third or fourth register with the information read out from said working memory and said first or second register with the next address in output from said incrementing register;
in case of no HIT, to transfer in a first time phase, through said first multiplexer, to said working memory, the current address stored in said current address latching register, to start a memory read operation at said current address and to load, through said second multiplexer, in said output register (30) the information read out from memory and received through said input bus, and to transfer, in a second time phase, to said working memory and through said first multiplexor, said next address, stored in said incrementing register, to start a second memory read operation at said next address and to load the information read out from memory in said third or fourth register respectively and the address contained in said incrementing register in said first or second register respectively, depending on whether the information previously read out from memory at the current address was an instruction or a data.

2) Cache memory as claimed in claim 1, for a data processing system in which the working memory is organized in pages each identified by a row address an readable in page mode,
wherein said current address latching register has a first (20) and a second (21) section, the first section for latching bits of a row address, the second section for latching bits of a column address,
-wherein said incrementing register is comprised of a section for incrementing and latching the only column addresses,
-wherein said first multiplexer has inputs connected exclusively to the output of said second section and to the outputs of said incrementing register, the row addresses of said memory being directly provided from the output of said first section, and
-wherein said logical control means comprises logical circuits for detecting if the next address, incremented from a current address, pertains to the same memory page, and for enabling the execution of a second memory read operation, in page mode, only if the incremented address pertains to the same memory page of the current address.

3) Cache memory as claimed in claim 1, for a data processing system in which a working memory is arranged for reading double words of 4 bytes, each referenced by a binary address code of N bits, and the central processing unit may request the reading of 2 bytes information, referenced by a binary address code of N + 1 bits where the N most significant bits references the memory location of 4 bytes where the requested information is contained and the less significant bit identifies the information position within the memory double word,

-wherein said logical control means comprises logical circuits which in presence of said least significant bit at logic level 0 inhibit, in case of HIT, the execution of said memory read operation at said next address as well as the loading of said first or second register and said third or fourth registers, and in case of no HIT causes in said first time phase, the inhibition from incrementing of said incrementing register, the loading of said first or second register with the information present in the output of said incrementing register, the loading of said third or fourth register with the information read out from said working memory, and the inhibition of any operation to be performed in said second time phase.

4) Cache memory as claimed in claim 1 comprising furhter status logic means, operative in response to said HIT signals and to said control signals on said input control bus, to inhibit at least said first comparator from further generating a HIT signal in case of instruction HIT occurring during a memory write eopration, to inhibit at least said second comparator from further generating a HIT signal in case of data HIT occurring during a memory write operation, and for enabling said first or second comparator respectively, once a memory read operation has been performed, without error, of an instruction or a data respectively.

FIG.1

EP 0 293 720 A2

FIG. 2

FIG. 3

FIG. 4

FIG.5

FIG.6